# EUROPÄISCHE PATENTSCHRIFT

(11) **EP 1 942 286 B1**
(45) Veröffentlichungstag und Bekanntmachung des Hinweises auf die Patenterteilung: **09.12.2009**
(21) Anmeldenummer: 08100038.2
(22) Anmeldetag: 03.01.2008
(51) Int. Cl.: F16D 55/02

(54) **Scheibenbremse, insbesondere für ein Nutzfahrzeug**
Disc brake, in particular for a commercial vehicle
Frein à disque, en particulier pour un véhicule utilitaire

(30) Priorität: 05.01.2007 DE 102007001210
(43) Veröffentlichungstag der Anmeldung: 09.07.2008
(73) Patentinhaber: KNORR-BREMSE Systeme für Nutzfahrzeuge GmbH, 80809 München (DE)
(72) Erfinder: Springer, Mario, 94535 Eging am See (DE); Härtl, Thomas, 94501 Beutelbach (DE)
(74) Vertreter: Mattusch, Gundula

(56) Entgegenhaltungen:
- DE-A1- 2 213 162
- DE-A1- 3 338 109
- DE-A1- 10 304 713

## Beschreibung

Die vorliegende Erfindung betrifft eine Scheibenbremse, insbesondere für ein Nutzfahrzeug, gemäß dem Oberbegriff des Anspruchs 1.

Eine Scheibenbremse entsprechend der Gattung ist aus der DE 199 07 958 A1 bekannt. Daraus ist entnehmbar, dass zum Schutz eines Aufnahmeraumes, in dem Funktionsteile des Bremssattels, wie Stellspindeln einer Zuspanneinrichtung oder dergleichen aufgenommen sind, eine der Bremsscheibe zugewandte Montage- und Funktionsöffnung mit Hilfe einer Verschlussplatte verschlossen ist. Darüber hinaus dient die Verschlussplatte als Tragteil diverser Anbauten, wie z.B. Faltenbälgen oder Dichtungen.

Die Befestigung der Verschlussplatte erfolgt bislang durch Schrauben, die im Randbereich umfänglich angeordnet und in den Bremssattel eingedreht sind.

Allerdings ist diese Art der Befestigung, die das Einbringen von Gewindebohrungen in den Bremssattel sowie ein drehmomentüberwachtes Anziehen der Schrauben einschließt, sehr zeitaufwendig und daher kostenintensiv und steht somit einer fertigungstechnischen Optimierung entgegen.

Um eine wirkungsvolle Abdichtung der Verschlussplatte gegenüber dem Bremssattel zu erreichen und so das Eindringen von Feuchtigkeit und Schmutz in den Aufnahmeraum zu verhindern, liegt der Verschlussdeckel abgedichtet am Bremssattel an.

Dabei erfolgt die Abdichtung bislang über eine ausgehärtete Dichtschnur, die in einer externen Vormontageeinrichtung zunächst als 2-Komponenten-Dichtung an den Verschlussdeckel montiert wird. Aus nahe liegenden Gründen ist diese Art der Aufbringung eines Dichtmittels nur mit einem erheblichen Zeitaufwand zu realisieren. Des Weiteren muss die Dichtfläche des Bremssattels, an dem die Dichtung anliegt und der üblicherweise als Gussteil ausgebildet ist, mechanisch bearbeitet werden, insbesondere durch Fräsen.

Der Forderung nach einer einfachen und schnellen Herstellung der als Serienteile in großen Stückzahlen hergestellten Scheibenbremsen werden die bekannten konstruktiven Lösungen nicht gerecht.

Hierzu zählt auch, dass aufgrund der vorherrschenden engen Platzverhältnisse die Montage der Verschlussplatte, vor allem deren Befestigung durch Verschrauben umständlich und aufwendig ist.

In der DE 103 04 713 A1 ist eine Scheibenbremse geoffenbart, bei der der Verschlussdeckel form- und/oder stoffschlüssig mit dem Bremssattel verbunden ist. Zur Herstellung eines Formschlusses wird dabei vorgeschlagen, die Außenkontur des Verschlussdeckels geringfügig größer zu halten als die Aufnahmekontur des Bremssattels, so dass der Deckel mit Übermaß in die mit einer Hinterschneidung vorgesehene Aufnahmekontur eingepresst werden kann. Als andere formschlüssige Verbindungen werden ein Verstemmen, Verprägen oder Umrollen der Aufnahmekontur des Bremssattels empfohlen.

Der Erfindung liegt die Aufgabe zugrunde, eine Scheibenbremse der gattungsgemäßen Art so weiterzuentwickeln, dass sie einfacher und kostengünstiger herstell- und montierbar ist.

Diese Aufgabe wird durch eine Scheibenbremse mit den Merkmalen des Anspruchs 1 gelöst.

Durch die Spanneinrichtung - insbesondere einen Spannbügel - bzw. durch diese konstruktive Ausbildung sind insbesondere mechanische Vorarbeiten vor einer Montage des Verschlussdeckels, wie sie beim Stand der Technik beispielsweise durch die Bearbeitung der Dichtfläche oder das Einbringen von Gewindebohrungen in den Bremssattel zwingend notwendig sind, nicht mehr erforderlich.

Dabei ist der Spannbügel aus einem Draht, vorzugsweise einem Federdraht gebogen und zwar so, dass er am Außenrand des Verschlussdeckels weitgehend in vollem Umfang anliegt. D.h., der Spannbügel entspricht in seinem Konturenverlauf etwa der Außenkontur des Verschlussdeckels.

Die Halterung des Spannbügels am Bremssattel erfolgt durch angeformte Haltenasen des Bremssattels, die über den Umfang der Montageöffnung des Aufnahmeraumes mehr oder weniger gleichmäßig verteilt angeordnet sind.

Da der Spannbügel als relativ einfaches Bauteil mit geringem Fertigungsaufwand herzustellen ist, wobei der Ausgangsdraht zweckmäßigerweise von einem Coil abzulängen und in die genannte Konturenform zu bringen ist, ist eine äußerst kostengünstige Herstellung möglich.

Auf eine mechanische Bearbeitung des Verschlussdeckelsitzes am Bremssattel, beispielsweise durch das erwähnte Fräsen oder auf das Einbringen von Gewindebohrungen für eine Verschlussdeckelverschraubung, kann gänzlich verzichtet werden. Naturgemäß ergeben sich hieraus gleichfalls wesentliche kostenmindernde Fertigungsvorteile.

Zur Abdichtung des Verschlussdeckels gegenüber dem Bremssattel ist nach einem weiteren Gedanken der Erfindung in einen zwischen dem Verschlussdeckel und dem Verschlussdeckelsitz des Bremssattels gebildeten Zwischenraum vor der Montage des Verschlussdeckels eine Flüssigdichtung einzuspritzen, die nach dem Einsetzen des Verschlussdeckels aushärtet.

Da sich diese Flüssigkeitsdichtung an die Oberflächengegebenheiten des Verschlussdeckelsitzes anpasst, ist eine besondere Bearbeitung dieses Bereiches, wie erwähnt, nicht erforderlich.

Eine externe Montage einer Dichtschnur am Verschlussdeckel vor dessen Einbau in den Bremssattel, wie dies bislang erforderlich war, ist nun nicht mehr notwendig, was naturgemäß die Montagezeiten verkürzt.

Nach einem Einsetzen des Verschlussdeckels, der im übrigen im Überdeckungsbereich mit den Haltenasen des Bremssattels Ausnehmungen aufweist, so dass das Einführen des Verschlussdeckels problemfrei möglich ist, wird der Spannbügel unter leichter Verformung, d.h. unter einem leichten Zusammendrücken zwischen die Haltenasen und den Verschlussdeckel geführt bis er praktisch seine Endlage einnimmt, in der er zwischen dem Verschlussdeckel und den Haltenasen eingeklemmt ist. Diese Klemmwirkung wird unterstützt durch eine Druckfeder, die im Innern des Aufnahmeraums angeordnet ist und die sich einerseits am Verschlussdeckel und andererseits an einer Brücke des Bremssattels abstützt, die Bestandteil einer Zuspanneinrichtung ist, mit der eine Bremsung eingeleitet wird.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teil einer erfindungsgemäßen Scheibenbremse in einer perspektivischen Ansicht

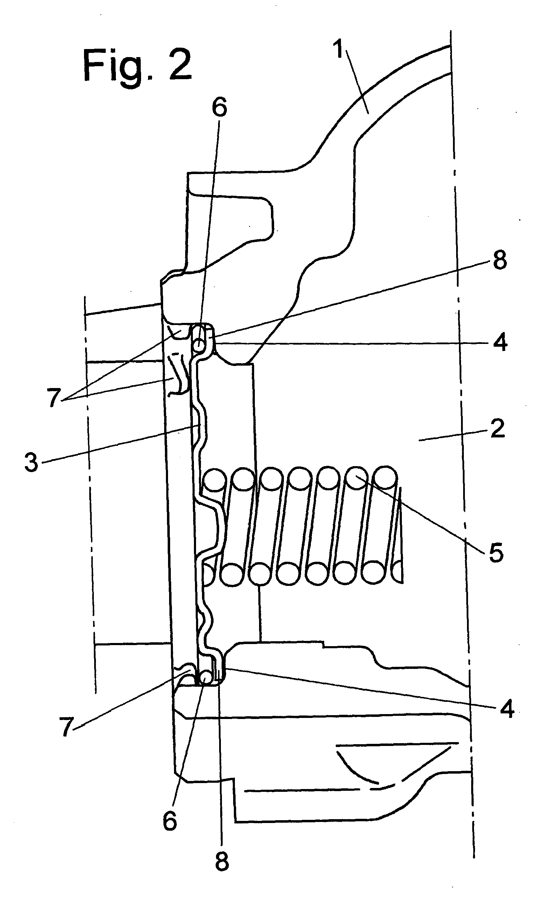

- Figur 2: einen Querschnitt durch den Teil nach Figur 1
- Figuren 3 und 4: jeweils eine Einzelheit der erfindungsgemäßen Scheibenbremse in einer Draufsicht.

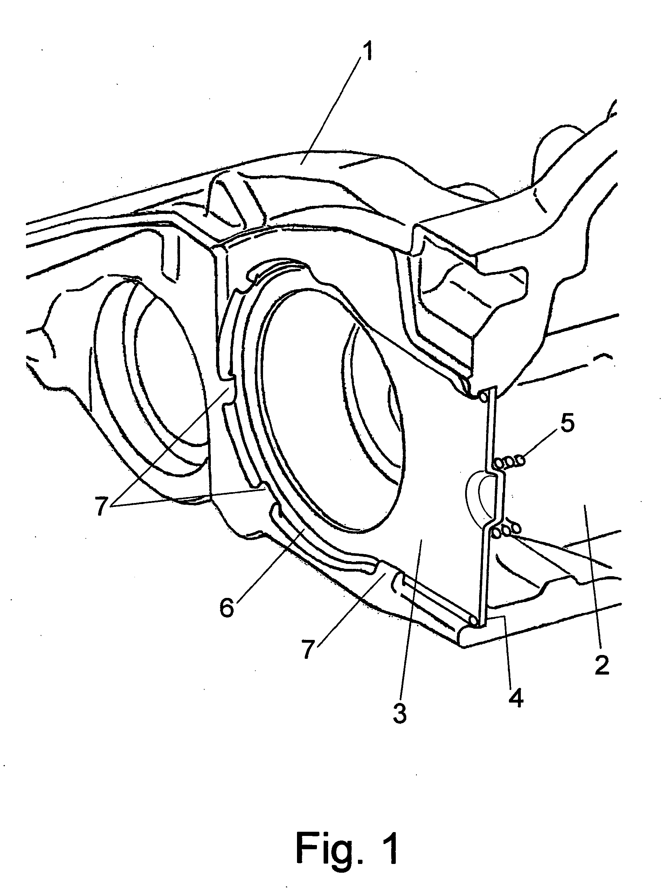

In der Figur 1 ist ein mit dem Bezugszeichen 1 versehener Bremssattel einer Scheibenbremse, insbesondere für ein Nutzfahrzeug, dargestellt, der einen Aufnahmeraum 2 für Funktionsteile wie Stellspindeln einer Zuspanneinrichtung oder dergleichen aufweist, dessen Montage- und Funktionsöffnung durch einen Verschlussdeckel 3 verschlossen ist.

Erfindungsgemäß ist der Deckel 3 mittels eines Spannbügels 6 am Bremssattel 1 gehalten, wobei sich dieser Spannbügel 6 in Funktionsstellung an einem umlaufenden Auflagerand 8 des Verschlussdeckels 3 einerseits und an über den Umfang des Randbereichs der Montageöffnung verteilten Haltenasen 7 abstützt, die an den Bremssattel 1 angeformt sind.

Der Verschlussdeckel 3 liegt mit seinem Auflagerand 8 an einem umlaufenden Verschlussdeckelsitz 4 des Bremssattels an, auf den vor einem Einsetzen des Verschlussdeckels 3 eine Flüssigkeitsdichtung aufgebracht ist, durch die eine Abdichtung des Aufnahmeraumes 2 gegenüber dem Außenbereich erreicht wird.

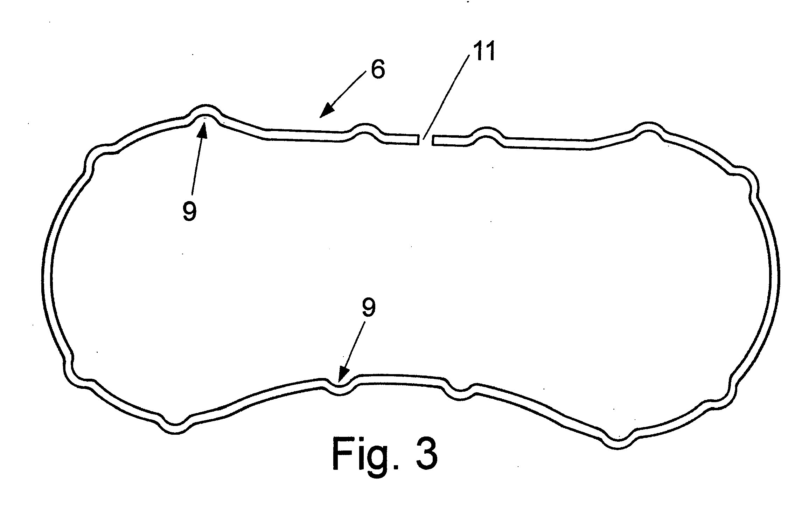

Wie insbesondere die Figur 3 sehr deutlich wiedergibt, besteht der Spannbügel 6 aus einem entsprechend der Umfangskontur des Verschlussdeckels 3 gebogenen Draht, der vorzugsweise aus einem Federstahl besteht und im Querschnitt rund ist, jedoch auch eine andere Querschnittskontur aufweisen kann.

Wie weiter erkennbar ist, ist der Spannbügel einseitig aufgetrennt, unter Bildung einer Lücke 11. Zum Verrasten des Spannbügels 6 im Bremssattel wird nach dem Einlegen des Verschlussdeckels 3 der Spannbügel entsprechend der Breite der Lücke 11 zusammengedrückt und in den durch die Haltenasen 7 gebildeten Hinterschnitt gelegt, wobei er am Auflagerand 8 zur Anlage kommt.

Mittels einer Druckfeder 5, die sich andererseits an einer nicht dargestellten Brücke einer Zuspanneinrichtung der Scheibenbremse abstützt, wird der Verschlussdeckel 3, an dessen Rückseite die Druckfeder 5 angreift, gegen den Spannbügel 6 und dieser gegen die Haltenasen 7 gedrückt, so dass der Verschlussdeckel fest verspannt ist.

Im Überdeckungsbereich mit den Haltenasen 7 weist der Spannbügel 6 jeweils Ausbauchungen 9 auf, mit denen er an den Haltenasen 7 anliegt.

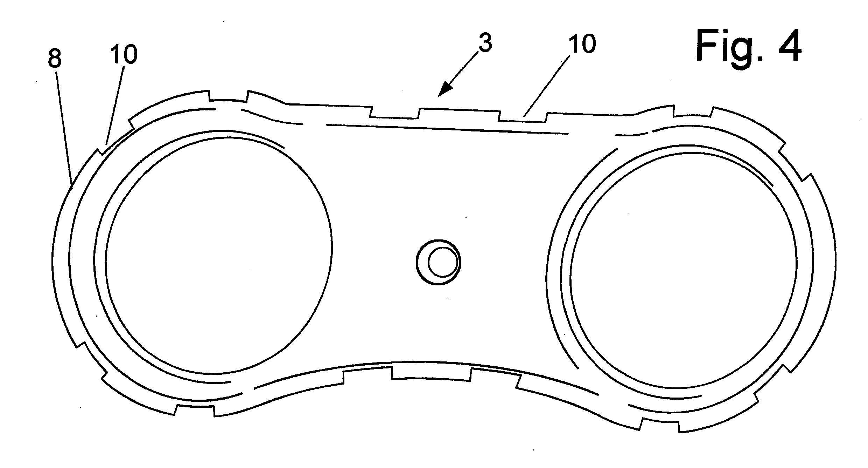

Jeder Haltenase 7 bzw. Ausbauchung 9 zugeordnet sind Ausnehmungen 10 im Auflagerand 8 des Verschlussdeckels 3 vorgesehen (Figur 4), so dass der Verschlussdeckel 3 problemlos in den Bremssattel bzw. dessen Montageöffnung eingesetzt werden kann. Dabei überfahren die Ausnehmungen 10 die Haltenasen 7.

### Bezugszeichenliste

- 1: Bremssattel
- 2: Aufnahmeraum
- 3: Verschlussdeckel
- 4: Verschlussdeckelsitz
- 5: Druckfeder
- 6: Spannbügel
- 7: Haltenase
- 8: Auflagerand
- 9: Ausbauchung
- 10: Ausnehmung
- 11: Lücke

## Patentansprüche

1. Scheibenbremse, insbesondere für ein Nutzfahrzeug, mit einem Bremssattel (1), der eine Bremsscheibe übergreift, die bei einer Bremsung beidseitig von Bremsbelägen kontaktiert wird, und der mindestens einen Aufnahmeraum (2) für Funktionsteile aufweist, der durch einen vorzugsweise abgedichtet anliegenden Verschlussdeckel (3) verschlossen ist, **dadurch gekennzeichnet, dass** der Verschlussdeckel (3) mittels einer Spanneinrichtung, insbesondere eines Spannbügels (6) am Bremssattel (1) gehalten ist.

2. Scheibenbremse nach Anspruch 1, **dadurch gekennzeichnet, dass** der Spannbügel (6) aus einem Draht geformt ist.

3. Scheibenbremse nach Anspruch 1 oder 2, **dadurch gekennzeichnet, dass** der Spannbügel (6) aus einem Federdraht besteht.

4. Scheibenbremse nach einem der Ansprüche 2 order 3, **dadurch gekennzeichnet, dass** der Draht des Spannbügels (6) im Querschnitt rund, oval oder mehreckig ist.

5. Scheibenbremse nach einem der vorhergehenden Ansprüche, **dadurch gekennzeichnet, dass** der Spannbügel (6) einerseits an einem Auflagerand (8) des Verschlussdeckels (3) und andererseits an Haltenasen (7) des Bremssattels (1) anliegt.

6. Scheibenbremse nach Anspruch 5, **dadurch gekennzeichnet, dass** die Haltenasen (7) über den Umfang eines eine Montageöffnung des Aufnahmeraumes (2) begrenzenden Randes des Bremssattels (1) verteilt angeordnet sind.

7. Scheibenbremse nach einem der Ansprüche 5 oder 6, **dadurch gekennzeichnet, dass** der Auflagerand (8) der Verschlussplatte (3) im Überdeckungsbereich mit den Haltenasen (7) Ausnehmungen (10) aufweist.

8. Scheibenbremse nach einem der Ansprüche 5 bis 7, **dadurch gekennzeichnet, dass** der Spannbügel (6) im Überdeckungsbereich mit den Haltenasen (7) Ausbauchungen (9) aufweist.

9. Scheibenbremse nach einem der vorhergehenden Ansprüche, **dadurch gekennzeichnet, dass** der Spannbügel (6) in nichtmontierter Stellung eine Lücke (11) aufweist, durch die der Spannbügel (6) zusammendrückbar ist.

10. Scheibenbremse nach einem der vorhergehenden Ansprüche, **dadurch gekennzeichnet, dass** vor dem Einsetzen des Verschlussdeckels (3) auf einen Verschlussdeckelsitz (4) des Bremssattels (1) eine Flüssigdichtung aufgebracht ist, an der der Verschlussdeckel (3) anschließend anliegt.

## Claims

1. Disc brake, in particular for a commercial vehicle, with a brake caliper (1) which overlaps a brake disc that is contacted by brake linings on both sides during braking, and which comprises at least one receiving space (2) for functional parts, which is closed by a closing cover (3) which preferably abuts in a sealing manner, **characterised in that** the closing cover (3) is held at the brake caliper (1) by a clamping unit, particularly a spring clip (6).

2. Disc brake according to claim 1, **characterised in that** the spring clip (6) is formed of a wire.

3. Disc brake according to claim 1 or 2, **characterised in that** the spring clip (2) is formed of a spring wire.

4. Disc brake according to one of claims 2 or 3, **characterised in that** the wire of the spring clip (6) is round, oval or polygonal in its cross section.

5. Disc brake according to one of the preceding claims, **characterised in that** the spring clip (6) abuts a support edge (8) of the closing cover (3) on the one hand, and holding lugs (7) of the brake caliper (1) on the other hand.

6. Disc brake according to claim 5, **characterised in that** the holding lugs (7) are arranged distributed over the circumference of an edge of the brake caliper (1) limiting a mounting opening of the receiving space (2).

7. Disc brake according to one of claims 5 or 6, **characterised in that** the support edge (8) of the closing plate (3) has recesses (10) with the holding lugs (7) in the covering region.

8. Disc brake according to one of claims 5 to 7, **characterised in that** the spring clip (6) has bulges (9) with the holding lugs (7) in the covering region.

9. Disc brake according to one of the preceding claims, **characterised in that** the spring clip (6) has a gap (11) in the non-mounted position, through which the spring clip (6) can be compressed.

10. Disc brake according to one of the preceding claims, **characterised in that** a fluid seal is applied prior to inserting the closing cover (3) on a closing cover seat (4) of the brake caliper (1), at which seal the closing cover subsequently abuts.

## Revendications

1. Frein à disque, en particulier pour un véhicule utilitaire, comprenant un étrier de frein (1) chevauchant un disque de frein, qui, au cas de serrage du frein, est contactée par des garnitures de frein de ces deux côtés, et comprenant au moins un espace de logement (2) pour des éléments fonctionnels, qui est fermé par un couvercle d'obturation (3) fermé, de préférence rendu étanche, **caractérisé en ce que** ledit couvercle d'obturation (3) est tenu audit étrier de frein (1) moyennant un moyen de serrage, en particulier un étrier de tension (6).

2. Frein à disque selon la revendication 1, **caractérisé en ce que** ledit étrier de tension (6) est formé d'un fil métallique.

3. Frein à disque selon la revendication 1 ou 2, **caractérisé en ce que** ledit étrier de tension (6) consiste en un fil d'acier pour ressort.

4. Frein à disque selon une quelconque des revendications 2 ou 3, **caractérisé en ce que** le fil métallique dudit étrier de tension (6) présente une section transversale ronde, ovale ou polygonale.

5. Frein à disque selon une quelconque des revendications précédentes, **caractérisé en ce que** ledit étrier de tension (6) porte, d'un côté, contre un bord d'appui (8) dudit couvercle d'obturation (3) et, d'autre côté, contre des talons de retenue (7) dudit étrier de frein (1).

6. Frein à disque selon la revendication 5, **caractérisé en ce que** lesdits tenons de retenue (7) sont disposés et distribués le long de la périphérie d'un bord dudit étrier de frein (1), qui limitent une ouverture de montage dudit espace de logement (2).

7. Frein à disque selon une quelconque des revendications 5 ou 6, **caractérisé en ce que** ledit bord d'appui (8) de la plaque d'obturation (3) présente des creux (10) dans la zone de chevauchement avec lesdits talons de retenue (7).

8. Frein à disque selon une quelconque des revendications 5 à 7, **caractérisé en ce que** ledit étrier de tension (6) présente des évasements (9) dans la zone de chevauchement avec lesdits talons de retenue (7).

9. Frein à disque selon une quelconque des revendications précédentes, **caractérisé en ce que** ledit étrier de tension, en position non montée, présente une solution de continuité (11) par laquelle ledit étrier de tension (6) est compressible.

10. Frein à disque selon une quelconque des revendications précédentes, **caractérisé en ce qu'**avant le placement dudit couvercle d'obturation (3) sur une siège du couvercle d'obturation (4) dudit étrier de frein (1), une garniture d'étanchéité est appliquée, contre laquelle porte ensuite ledit couvercle d'obturation (3).
